# EUROPÄISCHE PATENTSCHRIFT

(11) **EP 1 731 569 B1**
(45) Veröffentlichungstag und Bekanntmachung des Hinweises auf die Patenterteilung: **07.07.2010**
(21) Anmeldenummer: 06112707.2
(22) Anmeldetag: 18.04.2006
(51) Int. Cl.: C08L 77/00, A63C 5/00, B60R 13/00

(54) **Folie aus einer transparenten Formmasse**
Films made of a transparent moulding composition
Couches d'une composition à mouler transparente

(30) Priorität: 08.06.2005 DE 102005026264
(43) Veröffentlichungstag der Anmeldung: 13.12.2006
(73) Patentinhaber: Evonik Degussa GmbH, 45128 Essen (DE)
(72) Erfinder: Alting, Kirsten, Münster 48159 (DE); Schäfer, Georg, Datteln 45711 (DE); Wursche, Dr. Roland, Dülmen 48249 (DE); Bollmann, Sonja, Haltern am See 45721 (DE); Dowe, Andreas, Borken 46325 (DE); Baumann, Dr. Franz-Erich, Dülmen 48249 (DE)

(56) Entgegenhaltungen:
- EP-A- 0 779 084
- EP-A- 0 949 120
- ZHANG M J ET AL: "Crack growth mechanism in some polyamides" POLYMER DEC 1988, Bd. 29, Nr. 12, Dezember 1988 (1988-12), Seiten 2152-2158, XP002398074

## Beschreibung

Gegenstand der Erfindung ist die Verwendung einer transparenten Formmasse aus einem Polyamid oder Polyamidblend zur Herstellung von Folien.

Das derzeitige Standardverfahren zur Dekoration von Außenflächen an Automobilen ist das Lackieren. Diese Vorgehensweise verursacht jedoch zum einen hohe Fertigungskosten, die durch die Vorhaltung eines spezifischen Maschinenparks und den damit verbundenen Bedienaufwand beim Automobilhersteller bedingt sind, zum anderen wird hierdurch die Umwelt belastet. Eine Umweltbelastung resultiert beispielsweise aus freiwerdenden Lösungsmittelbestandteilen der eingesetzten Lacke sowie aus dem Anfall von Farbresten, die einer geordneten Entsorgung zugeführt werden müssen.

Ferner kommt hinzu, dass das Lackieren nur in begrenztem Maße geeignet ist, die Oberflächen von Kunststoffbauteilen zu dekorieren, die in den letzten Jahren im Automobilbau wegen der Gewichts- und Kostenersparnis an Beliebtheit gewonnen haben.

Der Lackierprozess von Kunststoffbauteilen als Komponenten der Karosserie ist beispielsweise on-line führbar, wobei das Kunststoffteil der gleichen Lackierbehandlung unterzogen wird wie die metallischen Komponenten. Dies führt zu einer einheitlichen Farbe, bringt aber infolge der hier üblichen kathodischen Tauchlackierung hohe Temperaturen mit sich, die die Materialauswahl erschweren. Außerdem muss eine Haftung der Lackrezeptur in gleicher Weise auf den sehr unterschiedlichen Substraten gewährleistet sein. Wird der Lackierprozess der Kunststoffteile in einem separaten Schritt (so genannte off-line-Lackierung) durchgeführt, der für Kunststoffe günstigere Prozessbedingungen beinhaltet, tritt die Problematik des colormatching auf, das heißt, der am Metall realisierte Farbton muss genau getroffen werden. Dies ist jedoch aufgrund der Unterschiede in Substrat, verwendbarer Basislackrezeptur und Prozessbedingungen sehr schwierig zu erreichen. Im Falle einer durch das Design vorgegebenen Farbdifferenz bleibt als gravierender Nachteil die Vorhaltung einer zweiten Lackiereinrichtung für die Kunststoffteile und der damit verbundene Aufwand, wobei auch ein zusätzlicher Zeitbedarf für die Fertigung des Automobils einzubeziehen ist. Die direkte Verwendung der unbehandelten, in der Regel spritzgegossenen Kunststoffteile ist unter ästhetischen Gesichtspunkten unvorteilhaft, da hier prozessbedingte Fehler der Oberfläche, wie etwa Bindenähte, Lufteinschlüsse, aber auch notwendige verstärkende Füllstoffe wie Glasfasern deutlich wahrnehmbar sind. Dies ist im Sichtbereich nicht tolerabel. Folglich muss eine Verbesserung der Oberflächenqualität vorgenommen werden, beispielsweise im Zuge einer Lackierung, wobei oft eine arbeitsintensive Vorbehandlung durch Schleifen und die Aufbringung eines Primers in dickeren Schichten nötig wird.

Ein Vorschlag zur Abhilfe besteht in der Verwendung von mehrschichtigen Kunststofffolien, die zur Abdeckung der Bauteile eingesetzt werden und nicht mehr lackiert werden müssen. Der Verbund zwischen Substrat und dekorierender Folie kann hierbei durch eine Reihe von Fertigungsverfahren realisiert werden. Die Folie kann beispielsweise mit dem Substrat verpresst werden oder man wählt ein Hinterspritzverfahren, bei dem die Folie bei der Bauteilherstellung in das Spritzgießwerkzeug eingelegt wird. Das Konzept einer Folie als Dekorträger kommt darüber hinaus einem Trend zur Individualisierung gestalterischer Elemente am Automobil entgegen. Diese Tendenz führt nämlich in der Fertigung zu einer größeren Palette von Modellen, die aber in der Anzahl der jeweils gefertigten Bauteile pro Serie reduziert sind. Da der Einsatz von Folien schnelle, problemlose Designwechsel erlaubt, kann dieser Herausforderung hiermit begegnet werden. Wichtig ist hierbei, dass durch die Folie die in der Automobilindustrie geforderten Standards hinsichtlich Oberflächeneigenschaften (Class A Oberfläche), Beständigkeit gegenüber Medien und optischem Eindruck erfüllt werden. Folien mit derartigen Eigenschaften sind ebenfalls in der Gestaltung von Innenoberflächen im Automobil gut einsetzbar.

Derartige Dekorfolien sind im Prinzip bekannt. Die EP 0 949 120 A1 beispielsweise beschreibt Dekorfolien mit einer transparenten Deckschicht aus Polyurethan, Polyacrylat, Fluorpolymer oder Mischungen aus Fluorpolymer und Polyacrylat. Ähnliche Dekorfolien sind auch aus der WO 94/03337 und der EP 0 285 071 A2 bekannt.

Das Gebrauchsmuster DE 295 19 867 U1 beschreibt eine dekorierbare Folie aus einem Copolyamid, das aus den Monomereinheiten Laurinlactam sowie Caprolactam und/oder Hexamethylendiamin/Dicarbonsäure aufgebaut ist. Derartige Copolyamide sind zwar im Allgemeinen transparent und sie sind auch gut dekorierbar, allerdings treten bei der Herstellung von Formteilen oder Folien aus solchen Copolyamiden durch Extrusion immer wieder Probleme auf. Insbesondere bilden sich Beläge am Spritzguss- oder Extrusionswerkzeug oder an den Abzugswalzen, die eine häufige Unterbrechung der Produktion wegen der nötigen Reinigungsarbeiten verursachen. Darüber hinaus ist die Wärmeformbeständigkeit derartiger Folien unzureichend, weshalb beim Dekorieren mittels Sublimations- oder Thermodiffusionsdruck die Gefahr der Verformung besteht. Man muss daher bei niedrigerer Temperatur dekorieren, als bei diesen Verfahren eigentlich wünschenswert wäre. Ein zu hoher Anteil kurzkettiger Comonomere führt weiterhin zu einer unerwünscht hohen Wasseraufnahme der daraus hergestellten Folien, die einen nicht hinnehmbaren Verzug der Fertigteile bei Feuchtigkeitseinwirkung bedingt. Ein Anwendungsgebiet für Dekorfolien sind Dekorträger etwa für Oberbeläge von Sportgeräten wie zum Beispiel Skier oder Snowboards bzw. von Haushaltsartikeln. Hier werden häufig einschichtige Folien eingesetzt, die auf der Ober- oder Unterseite bedruckt sind.

Im Artikel von M. Beyer und J. Lohmar, Kunststoffe 90 (2000) 1, S. 98 - 101, werden Beispiele für bedruckbare Folien aus PA12-Formmassen angegeben. Derartige Folien weisen jedoch noch Nachteile im Hinblick auf Oberflächenglanz und zu geringe Wärmeformbeständigkeit auf.

Die Aufgabe der vorliegenden Erfindung bestand insbesondere darin, eine Formmasse zur Verfügung zu stellen, die einerseits eine ausreichende Kristallinität besitzt, um eine ausreichende Spannungsrissbeständigkeit zu erzielen, die andererseits aber trotzdem ausreichend transparent ist. Eine ausreichende Spannungsrissbeständigkeit ist nicht nur von Bedeutung, wenn die daraus gefertigten Folien zusätzlich bzw. alternativ auch im Siebdruck oder Offsetdruck dekoriert werden sollen, sondern auch im späteren Gebrauch, wenn die Fertigteile mit alkoholbasierten Reinigungsmitteln bearbeitet werden. Die Transparenz muss so weit gegeben sein, dass bei einer Folie ein ausreichend konturscharfes Hinterdrucken möglich ist. Darüber hinaus sollte die Formmasse durch geringe Wasseraufnahme zumindest zu einem deutlich verringerten Verzug Anlass geben. Ein wesentlicher Aspekt der zugrunde liegenden Aufgabe bestand auch darin, dass eine Polyamidformmasse zur Verfügung gestellt werden sollte, die zu Folien verarbeitet werden kann, welche auch mittels Thermodiffusions- oder Sublimationsdruck gut bedruckbar sind. Diese thermischen Druckverfahren bedingen häufig eine erhöhte Wärmeformbeständigkeit sowie einen nicht zu hohen Wassergehalt der Folien oder Formteile. Bei den hier in Betracht kommenden Formmassen korreliert die Wärmeformbeständigkeit mit dem Kristallitschmelzpunkt Tₘ; für diese thermischen Druckverfahren ist ein Tₘ von mindestens 180 °C wünschenswert. Zu niedrige Wärmeformbeständigkeiten äußern sich in Verzug oder Deformation der zu bedruckenden Folien oder Formteile. Absenkung der Sublimationstemperatur beeinträchtigt hingegen Kontrast und Konturenschärfe des Druckbildes, da die Farbe nicht mehr tief genug in die Folie eindringt. Nehmen die Folien oder Formteile zu viel Feuchtigkeit auf, kann beim Thermodiffusionsdruck eine unerwünschte Blasenbildung eintreten. Es versteht sich für den Fachmann von selbst, dass die sonstigen Verarbeitungseigenschaften, wie die fest anhaftende Verklebung zum Untergrund, z. B. dem Skikörper, oder die Hinterspritzbarkeit, nicht durch oberflächliche, nicht eindiffundierte Farbreste beeinträchtigt werden dürfen.

Häufig wird von den bedruckten Folien ein bestimmter Oberflächenglanz gefordert, der bei der Einwirkung von Reinigungsmitteln oder auch einfach beim mechanischen Abreiben der Artikel nicht beeinträchtigt werden darf. Mechanische Einwirkung durch Stoß, Schlag, Kratzen oder Wechselbiegung darf weiterhin nicht zur Bildung oder Propagation von Rissen führen, da vor allem bei hinterspritzten Teilen oder mehrschichtigen Folien derartige Risse in die darunter liegenden Schichten fortschreiten und so zur Zerstörung des Teils führen können.

Überraschenderweise konnte diese Aufgabe gelöst werden durch die Verwendung einer Polyamid-Formmasse, die folgende Komponenten enthält:
a) maximal 90 Gew.-Teile eines Polyamids erhältlich aus einem Lactam bzw. einer Aminocarbonsäure mit mindestens 10 C-Atomen; und
b) 10 bis 100 Gew.-Teile PA1010,
wobei sich die Komponenten a) und b) zu 100 Gew.-Teilen ergänzen, zur Herstellung einer bedruckbaren oder bedruckten Folie. Die bedruckbare oder bedruckte Folie ist einschichtig oder mehrschichtig. Jedoch eignen sich auch spritzgegossene Teile sowie durch Blasformen gefertigte Hohlkörper grundsätzlich für die Bedruckung z. B. nach dem Thermodiffusionsverfahren.

Gegenstand der Erfindung sind auch die aus dieser Formmasse hergestellten Folien; auch Halbzeuge, wie thermoplastisch umformbare Folien für die nachfolgende Hinterspritzung oder Hinterschäumung, sind Gegenstand der Erfindung.

Das Polyamid, das als Komponente a) eingesetzt wird, ist im Regelfall PA10, PA11 oder PA12. Es ist in einer möglichen Ausführungsform in der Formmasse zu mindestens 0,1 Gew.-Teilen, mindestens 1 Gew.-Teil, mindestens 5 Gew.-Teilen bzw. mindestens 10 Gew.-Teilen enthalten.

In einer bevorzugten Ausführungsform besitzt die Polyamid-Formmasse einen Kristallitschmelzpunkt Tₘ im Bereich von 180 - 210 °C, besonders bevorzugt im Bereich von 185 - 205 °C und insbesondere bevorzugt im Bereich von 190 - 200 °C. Bei Anwesenheit der Komponente a) ist ein hiervon herrührender zweiter Kristallitschmelzpunkt zu erkennen; beide Kristallitschmelzpunkte können ganz oder teilweise koaleszieren. Weiterhin beträgt die Schmelzenthalpie des Polyamid-Blends bevorzugt mindestens 50 J/g, besonders bevorzugt mindestens 60 J/g und insbesondere bevorzugt mindestens 70 J/g. Tₘ und Schmelzenthalpie werden durch DDK gemäß ISO 11357 in der 2. Aufheizkurve mit einer Heizrate von 20 K/min bestimmt.

Im Allgemeinen besitzt das Polyamid-Blend eine relative Lösungsviskosität ηᵣₑₗ, gemessen an einer 0,5-gewichtsprozentigen Lösung in m-Kresol bei 23 °C gemäß ISO 307, von etwa 1,5 bis etwa 2,5, bevorzugt von etwa 1,7 bis etwa 2,2 und besonders bevorzugt von etwa 1,8 bis etwa 2,1. In einer bevorzugten Ausführungsform beträgt die Schmelzeviskosität, gemessen in einem mechanischen Spektrometer (Kegel-Platte) nach ASTM D4440 bei 240 °C und einer Scherrate von 100 s⁻¹, 250 bis 10 000 Pa s, bevorzugt 350 bis 8 000 Pa s und besonders bevorzugt 500 bis 5 000 Pa s.

Die Formmasse kann optional weitere Komponenten enthalten, wie etwa die gängigen Hilfs- und Zusatzstoffe in den für Polyamidformmassen üblichen Mengen, beispielsweise Stabilisatoren, Gleitmittel, Farbstoffe oder Nukleierungsmittel.

Diese Formmasse wird zur Herstellung von Folien verwendet , die ebenfalls Gegenstand der Erfindung sind. Die Folien bzw. Mehrschichtfolien haben in einer bevorzugten Ausführungsform eine Dicke von 0,02 bis 1,2 mm, besonders bevorzugt von 0,05 bis 1 mm, ganz besonders bevorzugt von 0,1 bis 0,8 mm und insbesondere bevorzugt von 0,2 bis 0,6 mm. Handelt es sich um eine mehrschichtige Folie, besitzt die Schicht aus der erfindungsgemäßen Formmasse, im Allgemeinen die Deckschicht, in einer bevorzugten Ausführungsform eine Dicke von 0,01 bis 0,5 mm, besonders bevorzugt von 0,02 bis 0,3 mm, ganz besonders bevorzugt von 0,04 bis 0,2 mm und insbesondere bevorzugt von 0,05 bis 0,15 mm. Die Folie wird mittels bekannter Methoden hergestellt, beispielsweise Extrusion, oder im Falle von mehrschichtigen Systemen durch Coextrusion oder Laminieren.

Bei einer mehrschichtigen Ausführung der Folie sind folgende Ausführungsformen bevorzugt:
1. Die mehrschichtige Folie enthält eine weitere Schicht aus einer Polyamidelastomer-Formmasse, insbesondere eines Polyetheramids oder eines Polyetheresteramids, und vorzugsweise eines Polyetheramids oder Polyetheresteramids auf Basis eines linearen aliphatischen Diamins mit 6 bis 18 und bevorzugt 6 bis 12 C-Atomen, einer linearen aliphatischen oder einer aromatischen Dicarbonsäure mit 6 bis 18 und bevorzugt 6 bis 12 C-Atomen und eines Polyethers mit mehr als durchschnittlich 2,3 C-Atomen pro Sauerstoffatom und einer zahlenmittleren Molmasse der Polyetherblöcke von 200 bis 2 000. Die Formmasse dieser Schicht kann weitere Blendkomponenten enthalten wie z. B. Polyacrylate oder Polyglutarimide mit Carboxyl- bzw. Carbonsäureanhydridgruppen oder Epoxidgruppen, einen funktionelle Gruppen enthaltenden Kautschuk und/oder ein Polyamid. Derartige Formmassen sind Stand der Technik; sie sind beispielsweise in der EP 1 329 481 A2 und der DE-OS 103 33 005 beschrieben, auf die hier ausdrücklich Bezug genommen wird. Um eine gute Schichtenhaftung zu gewährleisten, ist es vorteilhaft, wenn hier der Polyamidanteil des Polyamidelastomeren aus den gleichen Monomeren aufgebaut ist, wie sie in der Komponente a) oder b) der anderen Schicht verwendet werden.
2. Die mehrschichtige Folie enthält eine Haftvermittlerschicht zur Anbindung an das Substrat oder zur Verbindung innerhalb des mehrschichtigen Folienaufbaus, beispielsweise ein mit Carboxyl- bzw. Säureanhydridgruppen oder mit Epoxidgruppen funktionalisiertes Polyolefin, ein Blend aus dem Material der untersten Schicht und dem Substratmaterial oder ein thermoplastisches Polyurethan.
3. Die Folie enthält als unterste Lage eine harte Trägerschicht z. B. aus einem aliphatischen oder cycloaliphatischen Homo- oder Copolyamid oder einem Polymethacrylat- oder Polymethacrylimid-Copolymer, welche das Durchdrücken von Glas- oder Kohlefasern beim Hinterspritzen mit einer fasergefüllten Formmasse verhindert.

Diese Ausführungsformen können auch miteinander kombiniert werden. In jedem Fall ist bevorzugt, dass die Schicht aus dem erfindungsgemäß verwendeten Polyamid-Blend die Deckschicht bildet. Bei Bedarf, etwa bei erhöhten Anforderungen an die Kratzfestigkeit, kann diese Deckschicht gegebenenfalls noch mit einer Schutzschicht versehen sein, beispielsweise mit einem Klarlack auf Polyurethanbasis. Sie kann auch gegebenenfalls mit einer Montagefolie abgedeckt sein, die nach der Herstellung des Fertigteils abgezogen wird.

Der mit dieser Folie zu dekorierende Formkörper kann in einem vorgelagerten Fertigungsschritt separat z. B. durch Spritzgießen hergestellt werden oder durch Hinterspritzen bzw. Hinterschäumen einer gegebenenfalls bedruckten Folie hergestellt werden; in diesem Fall wird die gegebenenfalls bedruckte Folie in die Spritzgussform eingelegt.

Die zweite, unten liegende Schicht oder, bei mehr als 2 Schichten, eine der unten liegenden Schichten kann farblos transparent, transparent eingefärbt oder auch deckend eingefärbt sein, um spezielle Designvarianten in Kombination mit der transparenten Deckschicht darstellen zu können. In solchen Fällen kann die transparente Deckschicht zusätzlich von der Oberseite her bedruckt werden.

Die Folie ist in einer bevorzugten Ausführungsform eine Dekorfolie. Dekorfolien im Sinne der Erfindung sind Folien, die bedruckt werden können und/oder eine Farbschicht enthalten und darüber hinaus dazu bestimmt sind, mit einem Substrat verbunden zu werden, um dessen Oberfläche zu dekorieren. Die Dekoration kann auch dadurch bewirkt werden, dass optische Mängel der Oberfläche kaschiert werden, z. B. indem eine von Füll- oder Verstärkungsstoffen herrührende Oberflächenrauhigkeit abgedeckt wird.

Die Folien können beispielsweise als Schutzfolie gegen Verschmutzung, UV-Strahlung, Witterungseinflüsse, Chemikalien oder Abrieb verwendet werden, als Sperrfolie an Fahrzeugen, im Haushalt, an Böden, Tunnels, Zelten und Gebäuden oder als Dekorträger etwa für Oberbeläge von Sportgeräten, Innen- oder Außendekorationen an Kraftfahrzeugen, Booten, im Haushalt oder an Gebäuden. Diese Verwendungsmöglichkeiten gelten auch für Fälle, in denen die Formmasse deckend eingefärbt ist. Die stoffschlüssige Verbindung der Folie zum Substrat kann beispielsweise durch Verkleben, Verpressen, Laminieren, Coextrusion, Hinterspritzen, Hinterschäumen oder Hinterpressen hergestellt werden. Zum Erreichen einer verbesserten Haftung kann die Folie zuvor beispielsweise beflammt oder mit einem Plasma behandelt werden. Vor der Bildung des Verbundes zwischen Folie und Substrat kann die Folie noch bearbeitet oder umgeformt werden, beispielsweise durch Thermoformen oder andere Verfahren. Die Oberfläche kann beispielsweise durch Prägen strukturiert werden. Eine Strukturierung der Oberfläche ist auch vorgelagert im Rahmen der Folienextrusion möglich, beispielsweise durch speziell gestaltete Walzen. Das erhaltene Verbundteil kann anschließend noch umgeformt werden.

Geeignete Substrate sind beispielsweise Formmassen basierend auf Polyolefinen, Polyamiden, Polyestern, Polycarbonaten, ABS, Polystyrol oder Styrolcopolymeren.
In einer möglichen Ausführungsform wird die erfindungsgemäße Folie als Deckschicht eines Folienverbundes zur Gestaltung bzw. Dekoration von Oberflächen an oder in Automobilen und Nutzfahrzeugen verwendet, wobei die Folie haftend mit einem Kunststoff-Substrat verbunden ist. Das entsprechend gestaltete Bauteil kann flächig ausgeformt sein, wie etwa ein Karosserieteil, beispielsweise Dachmodul, Kotflügel, Motorhaube oder Tür. Daneben kommen auch Ausführungsformen in Frage, in denen längliche, mehr oder weniger gewölbte Bauteile erzeugt werden, etwa Verkleidungen, beispielsweise die Verkleidung so genannter A-Säulen am Automobil oder Zier- und Blendleisten aller Art. Ein weiteres Beispiel sind Schutzverkleidungen für Türschwellen. Neben Anwendungen im Außenbereich des Kraftfahrzeuges können auch Bestandteile des Interieurs vorteilhaft durch die erfindungsgemäßen Folien dekoriert werden, insbesondere Zierelemente wie Leisten und Blenden, da auch im Innenraum gute Dekorierbarkeit und Beständigkeit gegenüber Chemikalien, beispielsweise Reinigungsmitteln, erforderlich ist.

In einer weiteren möglichen Ausführungsform wird die erfindungsgemäße Folie als Oberbelag für Schneebretter aller Art, wie Skier oder Snowboards, verwendet.

Ein bekanntes Verfahren zur Ausführung von dekorierten Ski-Oberbelägen wird in der US 5 437 755 beschrieben. Gemäß diesem Verfahren wird der Ski nach dem so genannten Monocoque-System hergestellt, wobei der Oberbelag zunächst aus zwei Kunststofffolien aufgebaut wird, von denen die äußere transparent und die innere opak (weiß) ist. Vor dem Zusammenkleben der beiden Folien und dem nachfolgenden Tiefziehen werden die Außenseite der transparenten Oberfolie und eine der späteren Kontaktflächen zwischen der transparenten Oberfolie und der opaken Unterfolie mit unterschiedlichen Dekorationen bedruckt. Als geeignete Kunststoffe für die Oberfolie werden Acrylnitril-Butadien-Styrol-Copolymer (ABS), Acrylnitril-Styrol-Copolymer (AS), thermoplastisches Polyurethan (TPU) und aliphatische Polyamide, besonders PA11 und PA12, angegeben. Für die vor äußeren Einflüssen geschützte und nicht in jedem Fall bedruckte Unterfolie werden neben Polyesteramiden, Polyetheramiden, modifizierten Polyolefinen und Styrol-Carbonsäureanhydrid-Copolymeren auch Copolyamide beschrieben. Die Verbindung des Oberbelags mit dem Ski oder Snowboard kann aber auch nach allen anderen bekannten Formgebungs- und Verklebungsverfahren erfolgen.

Wird eine Monofolie verwendet, so ist diese transparent und wird vorzugsweise unterseitig bedruckt, wobei in diesem Fall ein weißer oder gegebenenfalls anders eingefärbter Kleber als optischer Hintergrund zum Verbinden der Folie mit dem Ski verwendet wird.

Wird eine coextrudierte Zweischichtfolie verwendet, so besteht diese vorzugsweise aus einer transparenten Oberschicht und einer weiß oder farbig pigmentierten Unterschicht als Hintergrund, wobei die Folie an der Oberseite bedruckt ist.

Die Erfindung wird nachfolgend beispielhaft illustriert. Die Herstellung der einzelnen Basispolyamide ist dem Fachmann bekannt und erfolgt z. B. nach DE-OS 20 44 105 (PA1010 bzw. PA11) und DE-OS 21 52 194 (PA12 und Copolyamide).

### Beispiel 1:

Zur Herstellung eines PA 1010 wurde ein 200-1-Rührautoklav mit folgenden Einsatzstoffen beschickt:

| | |
|---|---|
| 35,976 kg | 1,10-Decandiamin (als 89,5%ige wässrige Lösung), |
| 38,251 kg | Sebacinsäure sowie |
| 8,5 g | einer 50%igen wässrigen Lösung von hypophosphoriger Säure (entspricht 0,006 Gew.-%). |

Die Einsatzstoffe wurden in einer Stickstoffatmosphäre aufgeschmolzen und unter Rühren im geschlossenen Autoklaven auf ca. 220 °C erhitzt, wobei sich ein Innendruck von ca. 20 bar einstellte. Dieser Innendruck wurde 2 Stunden beibehalten; danach wurde die Schmelze unter kontinuierlichem Entspannen auf Normaldruck weiter auf 270 °C aufgeheizt und danach 1,5 Stunden im Stickstoffstrom bei dieser Temperatur gehalten. Anschließend wurde innerhalb von 3 Stunden auf Atmosphärendruck entspannt und weitere 3 Stunden Stickstoff über die Schmelze geleitet, bis anhand des Drehmoments kein weiterer Anstieg der Schmelzeviskosität mehr angezeigt wurde. Danach wurde die Schmelze mittels Zahnradpumpe ausgetragen und als Strang granuliert. Das Granulat wurde 24 Stunden unter Stickstoff bei 80 °C getrocknet.
Austrag: 65 kg

Das Produkt wies folgende Kennwerte auf:

| | |
|---|---|
| Kristallitschmelzpunkt Tₘ: | 192 °C und 204 °C |
| Schmelzenthalpie: | 78 J/g |
| Relative Lösungsviskosität ηᵣₑₗ: | 1 76 |

### Beispiel 2:

In einem identischen Reaktor wurde das Beispiel 1 mit folgenden Einsatzstoffen wiederholt:

| | |
|---|---|
| 35,976 kg | 1,10-Decandiamin (als 89,5%ige wässrige Lösung), |
| 38,251 kg | Sebacinsäure sowie |
| 8,5 g | einer 50%igen wässrigen Lösung von Hypophosphoriger Säure (entspricht 0,006 Gew.-%). |

Austrag: 63 kg

Das Produkt wies folgende Kennwerte auf:

| | |
|---|---|
| Kristallitschmelzpunkt Tₘ: | 191 °C und 203 °C |
| Schmelzenthalpie: | 73 J/g |
| Relative Lösungsviskosität ηᵣₑₗ: | 1,81 |

Der Granulataustrag wurde zur Anhebung der relativen Lösungsviskosität auf 2,23 bei einer Manteltemperatur von 165 °C in einem Taumeltrockner 24 Stunden unter Stickstoffüberleiten in fester Phase nachkondensiert.

### Vergleichsbeispiel 1:

Es wurde ein Copolyamid aus 80 Mol-% Laurinlactam und 20 Mol-% Caprolactam gemäß dem Stand der Technik hergestellt. Die relative Lösungsviskosität ηᵣₑₗ betrug 1,9.

| | |
|---|---|
| Kristallitschmelzpunkt Tₘ: | 158 °C |
| Schmelzenthalpie: | 46 J/g |

### Vergleichsbeispiel 2:

Es wurde ein Copolyamid aus 80 Mol-% Laurinlactam und 20 Mol-% eines äquimolaren Gemisches aus Hexamethylendiamin und 1.12-Dodecandisäure mit einem ηᵣₑₗ von 1,89 gemäß dem Stand der Technik hergestellt.

| | |
|---|---|
| Kristallitschmelzpunkt Tₘ: | 155 °C |
| Schmelzenthalpie: | 42 J/g |

### Vergleichsbeispiel 3:

Es wurde ein Copolyamid aus 85 Mol-% Laurinlactam, 7,5 Mol-% Isophorondiamin und 7,5 Mol-% 1.12-Dodecandisäure mit einem ηᵣₑₗ von 1,85 gemäß dem Stand der Technik hergestellt.

| | |
|---|---|
| Kristallitschmelzpunkt Tₘ: | 158 °C |
| Schmelzenthalpie: | 54 J/g |

### Vergleichsbeispiel 4:

Es wurde ein Homopolyamid aus Laurinlactam mit einem ηᵣₑₗ von 1,95 hergestellt.

| | |
|---|---|
| Kristallitschmelzpunkt Tₘ: | 178 °C |
| Schmelzenthalpie: | 73 J/g |

### Beispiel 3:

### Blend aus PA1010 + PA12 30/70 Gew.-%

Die Granulate aus Beispiel 1 und Vergleichsbeispiel 4 wurden mit 0,5 Gew.-% Hexamethylen-bis(3,5-tert.-butyl-4-hydroxy-phenylzimtsäure)-amid (IRGANOX 1098® der Ciba Additives GmbH) gemischt und bei einer Zylindertemperatur von 250 °C und einer Drehzahl von 250 Upm auf einem Zweiwellenextruder des Typs Werner & Pfleiderer ZSK 30 geschmolzen.

Das Polyamid-Gemisch zeigte folgende Kennwerte:

| | |
|---|---|
| Kristallitschmelzpunkt Tₘ: | 171 °C und 190 °C |
| Schmelzenthalpie: | 65 J/g |
| Relative Lösungsviskosität ηᵣₑₗ: | 1,96 |

### Beispiele 4 bis 7:

Analog Beispiel 3 stellte man folgende Blends her:

| Beispiel | PA1010 + PA12 [Gew.-%] | Rel. Lösungsviskosität ηᵣₑₗ | Schmelzpunkt Tₘ [°C] | Schmelzenthalpie [J/g] |
|---|---|---|---|---|
| 4 | 20/80 | 1,99 | 172/185 | 61 |
| 5 | 40/60 | 1,96 | 168/190 | 63 |
| 6 | 50/50 | 1,93 | 179/192 | 67 |
| 7 | 60/40 | 1,88 | 161/187/195 | 74 |

### Beispiele 8 und 9:

Analog Beispiel 3 stellte man folgende Blends aus PA1010 des Beispiels 2 und PA11 der relativen Lösungsviskosität ηᵣₑₗ von 1,80 her:

| Beispiel | PA1010 + PA11 [Gew.-%] | Rel. Lösungsviskosität ηᵣₑₗ | Schmelzpunkt Tₘ [°C] | Schmelzenthalpie [J/g] |
|---|---|---|---|---|
| 8 | 30/70 | 1,80 | 179/187 | 64 |
| 9 | 70/30 | 1,80 | 165/189 | 73 |

Aus den Produkten der Beispiele 1 bis 9 sowie der Vergleichsbeispiele 1 bis 4 wurden auf einer Collin-Folienanlage Folien der Dicke 0,3 mm extrudiert, bedruckt und beurteilt. Die Ermittlung des Glanzgrades erfolgte an 1 mm-Spritzplatten. Die Ergebnisse sind in der nachfolgenden Tabelle dargestellt.

Bei den Formmassen mit schlechter Verarbeitbarkeit war durch die langsame Nachkristallisation ein starker Verzug bemerkbar.

Die Bedruckung der 300 µm starken, über Kalanderfahrweise hergestellten Monofolien erfolgte über das Sublimationsbedruckungsverfahren. Dazu wurde ein Transferpapier (Accuplot EPQ DIN A4 oder EPSON Photo quality DIN A4) mit dem gewünschten Druckmotiv spiegelverkehrt mit Sublimationstinten (Rotech, Drucker: EPSON C84) bedruckt und mit der bedruckten Seite auf die zu bedruckende Folie gelegt. In einer temperierten Presse (Meyer Tisch-Fixierpresse Typ HM), wobei nur die obere Pressplatte temperiert war, wurde durch Schließen der Presse der Druckvorgang [bei T = 145 °C bis 175 °C, t = 2 bis 5 min; p(Druck) =1,1 N/cm (110 mbar)] durchgeführt. Der Druckvorgang war mit der Entnahme der Folie und dem Entfernen des Transferpapiers beendet.

**Tabelle: Beurteilung der Formmassen**

| Formmasse Aus | Transparenz | Verarbeitbarkeit bei Folienextrusion | Glanzgrad (Einfallswinkel 20°) | Bedruckung (Temperatur/Zeit); Konturschärfe | Kontrast |
|---|---|---|---|---|---|
| Vergleichsbeispiel 1 | gut | schlecht, starker Verzug | 80 | 145 °C / 10 min schlecht | mäßig |
| Vergleichsbeispiel 2 | gut | schlecht, starker Verzug | 85 | 145 °C / 10 min mäßig | mäßig |
| Vergleichsbeispiel 3 | gut | schlecht, starker Verzug | 95 | 145 °C / 10 min mäßig | mäßig |
| Vergleichsbeispiel 4 | schlecht | mäßig, Verzug | 90 | 160 °C / 5 min gut | gut |
| Beispiele 1 und 2 | sehr gut | gut | 95 | 175 °C / 2 min sehr gut | sehr gut |
| Beispiele 3 bis 9 | sehr gut | gut | 100 - 125 | 175 °C / 2 min sehr gut | sehr gut |

| | | | | | |
|---|---|---|---|---|---|
| Alle Folien aus den Beispielen 1 bis 9 ließen sich mittels Thermodiffusionsdruck dekorieren, die Folien der Vergleichsbeispiele 1 bis 4 wurden dabei mehr oder weniger stark deformiert. Bei den erfindungsgemäßen Beispielen 1 bis 9 zeigte sich ein überraschend hoher Glanzgrad. | | | | | |

## Patentansprüche

1. Verwendung einer Polyamid-Formmasse, die folgende Komponenten enthält:
a) maximal 90 Gew.-Teile eines Polyamids erhältlich aus einem Lactam bzw. einer Aminocarbonsäure mit mindestens 10 C-Atomen; und
b) 10 bis 100 Gew.-Teile PA1010,
wobei sich die Komponenten a) und b) zu 100 Gew.-Teilen ergänzen,
zur Herstellung einer Folie.

2. Verwendung einer Polyamid-Formmasse gemäß Anspruch 1,
**dadurch gekennzeichnet,**
**dass** als Komponente a) PA10, PA11 oder PA12 eingesetzt wird.

3. Verwendung einer Polyamid-Formmasse gemäß einem der vorhergehenden Ansprüche,
**dadurch gekennzeichnet,**
**dass** der Kristallitschmelzpunkt Tₘ der Polyamid-Formmasse mindestens 180 °C beträgt.

4. Verwendung einer Polyamid-Formmasse gemäß einem der vorhergehenden Ansprüche,
**dadurch gekennzeichnet,**
**dass** der Kristallitschmelzpunkt Tₘ der Polyamid-Formmasse mindestens 190 °C beträgt.

5. Verwendung einer Polyamid-Formmasse gemäß einem der vorhergehenden Ansprüche,
**dadurch gekennzeichnet,**
**dass** der Kristallitschmelzpunkt Tₘ der Polyamid-Formmasse mindestens 195 °C beträgt.

6. Folie, die gemäß den Ansprüchen 1 bis 5 verwendete Formmasse enthält.

7. Folie, die gemäß den Ansprüchen 1 bis 5 verwendete Formmasse enthält und durch Extrudieren, Blasformen oder Spritzgießen erhalten wird.

8. Folie gemäß einem der Ansprüche 6 und 7,
**dadurch gekennzeichnet,**
**dass** sie einschichtig oder mehrschichtig ist.

9. Foli gemäß Anspruch 8,
**dadurch gekennzeichnet,**
**dass** sie eine Dicke von 0,02 bis 1,2 mm aufweist.

10. Folie gemäß einem der Ansprüche 8 und 9,
**dadurch gekennzeichnet,**
**dass** sie eine oder mehrere weitere untenliegende Schichten enthält, die ausgewählt sind aus der Gruppe Polyamid-Elastomer, Polyamid, Copolyamid, Haftvermittler sowie Mischungen hiervon.

11. Folie gemäß einem der Ansprüche 8 bis 10,
**dadurch gekennzeichnet,**
**dass** eine der unten liegenden Schichten transparent oder deckend eingefärbt ist.

12. Folie gemäß einem der Ansprüche 8 bis 11,
**dadurch gekennzeichnet,**
**dass** sie ein Oberbelag für Skier oder Snowboards ist.

13. Folie gemäß einem der Ansprüche 8 bis 12,
**dadurch gekennzeichnet,**
**dass** sie eine Mehrschichtfolie ist und die Schicht aus der Formmasse gemäß Anspruch 1 eine Dicke von 0,01 bis 0,5 mm aufweist.

14. Folie gemäß einem der Ansprüdie 8 bis 13, **dadurch gekennzeichnet, dass** sie bedmcket ist.

15. Verbundteil, zusammengesetzt aus einer Folie gemäß einem der Ansprüche 8 bis 14 und einem Substrat.

16. Verbundteil gemäß Anspruch 15,
**dadurch gekennzeichnet,**
**dass** es ein Teil eines Kraftfahrzeug-Innenraumes oder ein Karosserieteil eines Kraftfahrzeuges ist.

17. Verfahren zur Herstellung eines Verbundteils gemäß einem der Ansprüche 15 und 16,
**dadurch gekennzeichnet,**
**dass** das Verbundteil durch Verkleben, Hinterspritzen, Coextrusion, Verpressen, Laminieren, Hinterpressen oder Hinterschäumen sowie gegebenenfalls durch nachfolgendes Umformen hergestellt wird.

## Claims

1. Use of a polyamide molding composition which comprises the following components:
a) at most 90 parts by weight of a polyamide obtainable from a lactam or from an amino carboxylic acid having at least 10 carbon atoms; and
b) from 10 to 100 parts by weight of PA1010, where components a) and b) give a total of 100 parts by weight,
for production of a foil.

2. Use of a polyamide molding composition according to Claim 1,
**characterized in that**
PA10, PA11, or PA12 is used as component a).

3. Use of a polyamide molding composition according to any of the preceding claims,
**characterized in that**
the crystallite melting point Tₘ of the polyamide molding composition is at least 180°C.

4. Use of a polyamide molding composition according to any of the preceding claims,
**characterized in that**
the crystallite melting point Tₘ of the polyamide molding composition is at least 190°C.

5. Use of a polyamide molding composition according to any of the preceding claims,
**characterized in that**
the crystallite melting point Tₘ of the polyamide molding composition is at least 195°C.

6. Foil which comprises the molding composition used according to Claims 1 to 5.

7. Foil which comprises the molding composition used according to Claims 1 to 5 and is obtained via extrusion, blow molding, or injection molding.

8. Foil according to Claims 6 or 7,
**characterized in that**
it has one or more layers.

9. Foil according to Claim 8,
**characterized in that**
it has a thickness of from 0.02 to 1.2 mm.

10. Foil according to Claim 8 or 9,
**characterized in that**
it comprises one or more other underlayers, selected from the group of polyamide elastomer, polyamide, copolyamide, adhesion promoter, and mixtures thereof.

11. Foil according to any of Claims 8 to 10,
**characterized in that**
one of the underlayers has been transparently or opaquely colored.

12. Foil according to any of Claims 8 to 11,
**characterized in that**
it is a topcoat for skis or snowboards.

13. Foil according to any of Claims 8 to 12,
**characterized in that**
the foil is a multilayer foil and the thickness of the layer composed of the molding composition of Claim 1 is from 0.01 to 0.5 mm.

14. Foil according to any of Claims 8 to 13,
**characterized in that**
it has been printed.

15. Composite part composed of a foil according to any of Claims 8 to 14 and of a substrate.

16. Composite part according to Claim 15,
**characterized in that**
it is part of a motor vehicle interior or is a bodywork part of a motor vehicle.

17. Process for production of a composite part according to Claim 15 or 16,
**characterized in that**
the composite part is produced via adhesive bonding, coextrusion, pressing, lamination, or in-mold coating by an injection-molding, compression-molding, or foaming process, and also, if appropriate, via subsequent forming.

## Revendications

1. Utilisation d'une masse de moulage de polyamide qui contient les composants suivants :
a) au maximum 90 parties en poids d'un polyamide pouvant être obtenu à partir d'un lactame ou d'un acide aminocarboxylique comprenant au moins 10 atomes de carbone ; et
b) 10 à 100 parties en poids de PA1010,
les composants a) et b) se complétant à 100 parties en poids,
pour la production d'une feuille.

2. Utilisation d'une masse de moulage de polyamide selon la revendication 1, **caractérisée en ce qu'**on utilise du PA10, du PA11 ou PA12 comme composant a).

3. Utilisation d'une masse de moulage de polyamide selon l'une quelconque des revendications précédentes, **caractérisée en ce que** le point de fusion des cristaux Tₘ de la masse de moulage de polyamide est d'au moins 180°C.

4. Utilisation d'une masse de moulage de polyamide selon l'une quelconque des revendications précédentes, **caractérisée en ce que** le point de fusion des cristaux Tₘ de la masse de moulage de polyamide est d'au moins 190°C.

5. Utilisation d'une masse de moulage de polyamide selon l'une quelconque des revendications précédentes, **caractérisée en ce que** le point de fusion des cristaux Tₘ de la masse de moulage de polyamide est d'au moins 195°C.

6. Feuille qui contient la masse de moulage utilisée selon les revendications 1 à 5.

7. Feuille qui contient la masse de moulage utilisée selon les revendications 1 à 5 et qui est obtenue par extrusion, moulage par soufflage ou moulage par injection.

8. Feuille selon l'une quelconque des revendications 6 et 7, **caractérisée en ce qu'**elle est à une ou plusieurs couches.

9. Feuille selon la revendication 8, **caractérisée en ce qu'**elle présente une épaisseur de 0,02 à 1,2 mm.

10. Feuille selon l'une quelconque des revendications 8 et 9, **caractérisée en ce qu'**elle contient une ou plusieurs autres couches sous-jacentes, qui sont choisies dans le groupe formé par les élastomères de polyamide, le polyamide, le copolyamide, les promoteurs d'adhérence ainsi que leurs mélanges.

11. Feuille selon l'une quelconque des revendications 8 à 10, **caractérisée en ce qu'**une des couches sous-jacentes est transparente ou présente une couleur couvrante.

12. Feuille selon l'une quelconque des revendications 8 à 11, **caractérisée en ce qu'**il s'agit d'un recouvrement supérieur pour des skis ou des snowboards.

13. Feuille selon l'une quelconque des revendications 8 à 12, **caractérisée en ce qu'**il s'agit d'une feuille à plusieurs couches et la couche constituée par la masse de moulage selon la revendication 1 présente une épaisseur de 0,01 à 0,5 mm.

14. Feuille selon l'une quelconque des revendications 8 à 13, **caractérisée en ce qu'**elle est imprimée.

15. Pièce composite, constituée par une feuille selon l'une quelconque des revendications 8 à 14 et un substrat.

16. Pièce composite selon la revendication 15, **caractérisée en ce qu'**il s'agit d'une partie d'un habitacle intérieur d'un véhicule automobile ou d'une pièce de carrosserie d'un véhicule automobile.

17. Procédé pour la préparation d'une pièce composite selon l'une quelconque des revendications 15 et 16, **caractérisé en ce que** la pièce composite est produite par collage, moulage par injection, coextrusion, pressage, laminage, pressage par injection ou moussage par injection ainsi que le cas échéant par formage consécutif.
